# EUROPEAN PATENT SPECIFICATION

(11) **EP 3 363 974 B1**
(45) Date of publication and mention of the grant of the patent: **08.04.2020**
(21) Application number: 18155903.0
(22) Date of filing: 09.02.2018
(51) Int. Cl.: E05B 83/24, E05B 77/36, E05B 15/04

(54) **HOOD LOCK APPARATUS**
HAUBENVERRIEGELUNGSVORRICHTUNG
APPAREIL DE VERROUILLAGE DE CAPOT

(30) Priority: 15.02.2017 JP 2017026313
(43) Date of publication of application: 22.08.2018
(73) Proprietor: Mitsui Kinzoku ACT Corporation, Yokohama-shi, Kanagawa 220-0011 (JP)
(72) Inventor: OGAWASE, Noboru, Yokohama-shi, Kanagawa 2310813 (JP); NISHIJO, Toshihisa, Yokohama-shi, Kanagawa 2310813 (JP)
(74) Representative: Grünecker Patent- und Rechtsanwälte PartG mbB

(56) References cited:
- DE-U1- 20 316 858
- JP-A- H02 232 487
- US-A1- 2006 006 669

## Description

### TECHNICAL FIELD

The disclosure relates to a hood lock apparatus for keeping a hood of a vehicle in a closed state by locking a striker provided on the hood.

### BACKGROUND

A hood lock apparatus described in Japanese Patent No. 2798412 includes a base in which a slit in which a striker fits is formed, a fork for locking the striker which fits in the slit, a claw lever for locking the fork by meshing with the fork in which the striker is locked and a lift lever for pushing up the striker which is locked by the fork. A tensile coil spring is provided so as to straddle a space defined between the claw lever and the lift lever, and this tensile coil spring biases the claw lever in a direction in which the claw lever meshes with the fork and biases the lift lever in a direction in which the lift lever pushed up the striker.

Such a hood lock apparatus is known also from US 2006/006669 A1 which discloses a ratchet engagable with a striker to selectively control separation between a closure panel of a vehicle and another portion of the vehicle, and a lift lever to bias the striker away from an engaged position with the ratchet. In some embodiments, the lift lever exerts a lower amount of force upon the striker in a latched position than in an unlatched position.

There may be a case where low-level noise (rattling noise) is generated as a result of a hood vibrating while a vehicle is running or idling, and a gap between the striker and a latch is raised as one of causes for generating the rattling noise. The vibration of the hood causes repeatedly an abutment between the striker and the latch which are spaced apart from each other with the gap defined therebetween, which generates the rattling noise. In the hood lock apparatus described in Japanese Patent No. 2798412, the tensile coil spring biases the lift lever, and the lift lever so biased pushes up the striker, whereby the gap between the striker and the latch is eliminated, and the generation of rattling noise can be suppressed.

However, in order to push up the hood which is a relatively heavy part, a certain great magnitude of force corresponding to such a heavy part is required. In the hood lock apparatus described in Japanese Patent No. 2798412, the tensile coil spring is placed below a rotational shaft of the lift lever and is placed within a limited range of the hood lock apparatus. In this case, the length and extension amount of the tensile coil spring are limited due to the size of the hood lock apparatus. Then, in order to obtain a biasing force which is good enough to push up the hood, the spring constant of the tensile coil spring is increased. However, in the event that the spring constant of the tensile coil spring is increased, there may be caused fears that the operability in closing the hood is deteriorated.

Namely, for the striker to be locked by the fork, the striker is once pushed in deeper towards a bottom side of the slit than a locking position. This causes the claw lever to mesh with the fork, whereby the fork is locked, and the striker is then locked by the fork so locked. In the event that the spring constant of the tensile coil spring is great, an operation force is increased which is required to once push in the striker deeper towards the bottom side of the slit against the pushing effort of the lift lever. This may causes fears that the operability in closing the hood is deteriorated.

### SUMMARY

Illustrative aspects of the disclosure provide a hood lock apparatus which is small in size and superior in operability and which can suppress the generation of rattling noise.

According to one illustrative aspect of the disclosure, there may be provided a hood lock apparatus configured to hold a hood of a vehicle in a closed state by locking a striker provided on the hood, the hood lock apparatus comprising: a base plate fixed to a vehicle body structural member of an engine compartment, the engine compartment being opened and closed by the hood, the base plate comprising a striker groove into which the striker enters in response to a closing operation of the hood; a latch rotatably supported on the base plate, the latch being configured to lock the striker entered into the striker groove so as not to exit from the striker groove; a locking plate rotatably supported on the base plate, the locking plate being configured to lock the latch, which locks the striker, so as not to rotate; a rattle lever rotatably supported on the base plate, the rattle lever being configured to hold the striker, which is locked by the latch, with the latch; and a rattle spring provided to extend between the base plate and the rattle lever, the rattle spring being configured to bias the rattle lever holding the striker with the latch towards the striker, wherein the rattle spring is disposed to straddle a first center line, the first center line passing through a rotational shaft of the rattle lever and extending in a direction which is at right
angles to a direction in which the striker groove extends, wherein the latch comprises an engaging portion, wherein the rattle lever comprises an engaging portion, wherein the engaging portion of the latch and the engaging portion of the rattle lever being brought into engagement with each other so as to transmit a biasing force of the rattle spring from the rattle lever to the latch, and wherein in a state where the rattle lever holds the striker with the latch being locked by the locking plate, the engaging portion of the latch and the engaging portion of the rattle lever are spaced apart from each other.

According thereto, it is possible to provide the hood lock apparatus which is small in size and superior in operability and which can suppress the generation of rattling noise.

### BRIEF DESCRIPTION OF DRAWINGS

Fig. 1 is a front view of an example of a hood lock apparatus which assists at the description of an embodiment of the disclosure;
Fig. 2 is a rear view of the hood lock apparatus shown in Fig. 1;
Fig. 3 is a front view of the hood lock apparatus shown in Fig. I with a latch and a locking plate omitted from illustration;
Fig. 4 is a front view of a state of the hood lock apparatus shown in Fig. I in which the hood lock apparatus holds a hood in a fully closed state;
Fig. 5 is a front view of the hood lock apparatus shown in Fig. 4 with the latch and the locking plate omitted from illustration;
Fig. 6 is a front view of a base plate of the hood lock apparatus shown in Fig. 1;
Fig. 7 is an enlarged view of a portion which is surrounded by a broken line frame VII shown in Fig. 4; and
Fig. 8 is a front view of the hood lock apparatus shown in Fig. 1, showing a state where a hood is popped up.

### DETAILED DESCRIPTION

A hood lock apparatus 1 is set on a vehicle body structural member of an engine compartment which is opened and closed by a hood of a vehicle and holds the hood in a closed state by locking a striker S which is fixed to a distal end of the hood. The hood lock apparatus 1 includes a base plate 2, a latch 3, a locking plate 4, a secondary latch 5 and a rattle lever 6.

The base plate 2 has a plate-shaped main body portion 20 which supports rotatably thereon the latch 3, the locking plate 4, the secondary latch 5 and the rattle lever 6 and a pair of left and right fixing portions 21 which are fixed to a vehicle body structural member. The pair of fixing portions 21 are provided on one side of the main body portion 20 so as to project from the one side of the main body portion 20. A space is defined between the main body portion 20 and the vehicle body structural member at a state where the pair of fixing portions 21 are fixed to the vehicle body structural member. A striker groove 22 is provided in the main body portion 20. The striker S enters the striker groove 22 as the hood is closed, and the striker S exits from the striker groove 22 as the hood is opened.

The latch 3 is disposed on a side of the main body portion 20 of the base plate 2 from which the pair of fixing portions 21 are projected. The side of the main body portion 20 faces the vehicle body structural member when the pair of fixing portions 21 are fixed to the vehicle body structural member, and this side of the main body portion 20 may be referred to as a first side. That is, the latch 3 is disposed on the first side of the main body portion 20. The latch 3 is disposed on either of a left-hand and right-hand sides of the striker groove 22 of the base plate 2. The latch 3 is rotatably supported on the main body portion 20 of the base plate 2 by a latch shaft 30 provided on the base plate 2.

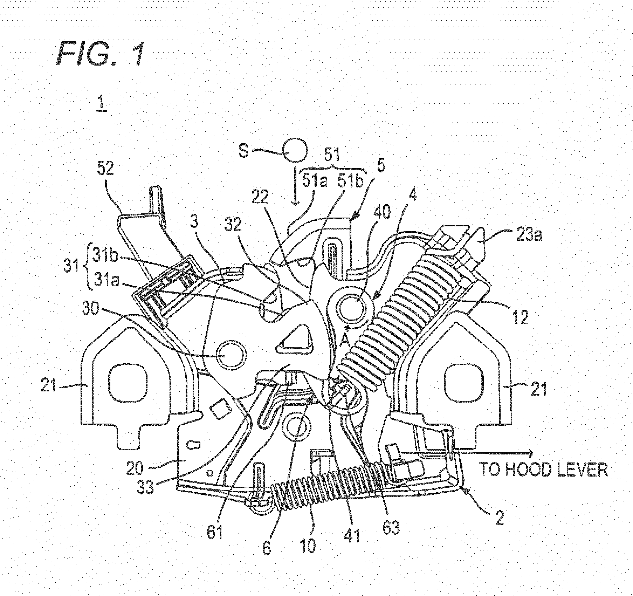

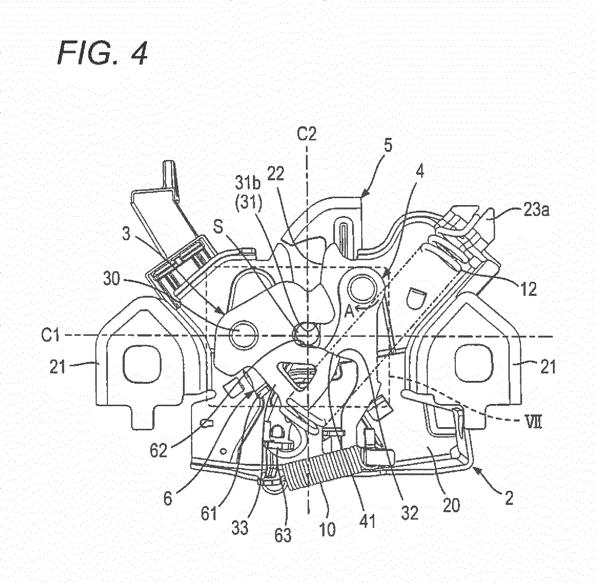

The latch 3 has a locking groove 31 which locks the striker S. Then, the latch 3 can rotate between an unlatching position (refer to Fig. 1) where an opening of the locking groove 31 overlaps an opening of the striker groove 22 of the base plate 2 so that the striker S is allowed to enter and exit from the striker groove 22 and the locking groove 31 and a latching position (refer to Fig. 4) where the opening of the locking groove 31 deviates from the striker groove 22 so that the striker S is surrounded four sides by both side walls of the striker groove 22 and both side walls 31a, 31b of the locking groove 31, whereby the striker S is locked so as not to exit from the striker groove 22 and the locking groove 31.

A first engaging portion 32, which is configured to be brought into engagement with the locking plate 4, is provided at an open end portion of the locking groove 31 of the latch 3. A second engaging portion 33, which is configured to be brought into engagement with the rattle lever 6, is provided on an outer circumferential portion of the latch 3.

As with the latch 3, the locking plate 4 is disposed on the first side of the main body portion 20 of the base plate 2 facing the vehicle body structural member. The locking plate 4 is located on an opposite side of the latch 3 across the striker groove 22 of the base plate 2. The locking plate 4 is rotatably supported by a locking plate shaft 40 which is provided on the base plate 2.

The locking plate 4 has an engaging portion 41 which is configured to be brought into engagement with the first engaging portion 32 of the latch 3. This engaging portion 41 can be rotated between a locking position (refer to Fig. 4) where the engaging portion 41 is brought into engagement with the first engaging portion 32 when the latch 3 is in the latching position so as to prevent the latch 3 from being rotated towards the unlatching position and an unlocking position (refer to Fig. 1) where the engaging portion 41 is disposed apart from the latch 3 so as to release the engagement of the engaging portion 41 with the first engaging portion 32.

Then, the locking plate 4 is biased in a direction indicated by an arrow A towards the locking position by a coiled locking plate spring 10 which is attached to the main body portion 20 of the base plate 2 at one end and to one end portion of the locking plate at the other end thereof.

The locking plate 4 is connected to a hood lever which is provided inside a passenger compartment of the vehicle via a wire, not shown, and is rotated in an opposite direction to the direction indicated by the arrow A towards the unlocking position in response to an operation of the hood lever.

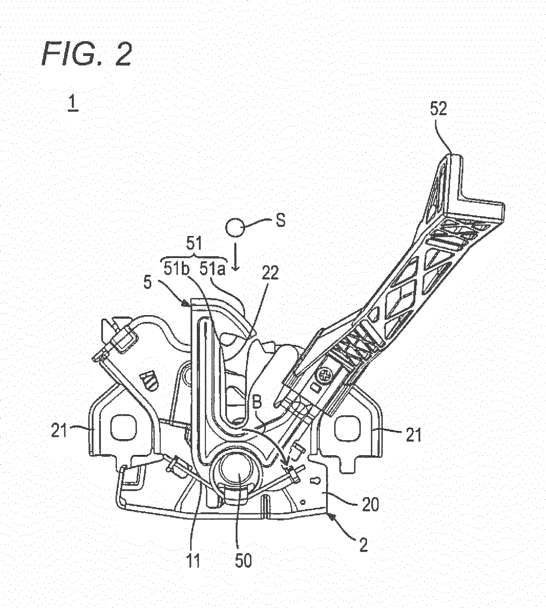

As shown in Fig. 2, the secondary latch 5 is disposed on a second side of the main body portion 20 of the base plate 2. The second side of the main body portion 20 is an opposite side of the first side of the main body portion 20 of the base plate 2 facing the vehicle body structural member. The secondary latch 5 is rotatably supported by a secondary latch shaft 50 provided on the main body portion 20.

The secondary latch 5 has a locking portion 51 for locking the striker S, and the locking portion 51 is disposed outside the striker groove 22 of the main body portion 20 and on a traveling path of the striker S and can be rotated between a secondary latching position (refer to Figs. 1 and 4) where the striker S which exits from the striker groove 22 is locked and a secondary unlatching position where the locking portion 51 is disposed so as to be deflected from the traveling path of the striker S.

Then, the secondary latch 5 is biased in a direction indicated by an arrow B towards the secondary latching position by a coiled secondary latch spring 11 which is attached to the base plate 2 at one end and to the secondary latch 5 at the other end thereof.

A safety lever 52 is connected to the secondary latch 5, and the secondary latch 5 is rotated in an opposite direction to the direction indicated by the arrow B towards the secondary unlatching position in response to an operation of the safety lever 52.

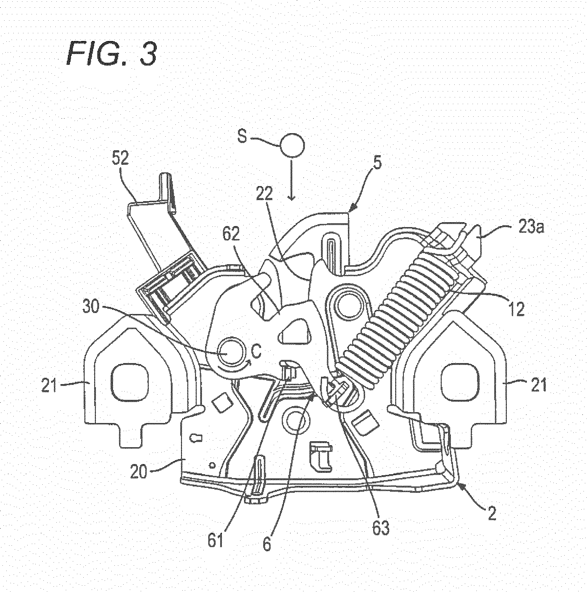

As shown in Fig. 3, as with the latch 3 and the locking plate 4, the rattle lever 6 is disposed on the first side of the main body portion 20 of the base plate 2 facing the vehicle body structural member. The rattle lever 6 is disposed between the main body portion 20 and the latch 3. The rattle lever 6 is rotatably supported by the latch shaft 30.

Then, the rattle lever 6 is biased in a direction indicated by an arrow C by a coiled rattle spring 12 which is attached to the main body portion 20 of the base plate 2 at one end and to the rattle lever 6 at the other end thereof.

The rattle lever 6 has an engaging portion 61 which is configured to be brought into engagement with the second engaging portion 33 (refer to Fig. 1) of the latch 3. When the latch 3 stays in the unlatching position, the engaging portion 61 is brought into engagement with the second engaging portion 33, and the rattle lever 6 is rotated together with the latch 3 in an opposite direction to the direction indicated by the arrow C as the latch 3 is rotated from the unlatching position towards the latching position. A biasing force of the rattle spring 12 is transmitted to the latch 3 via the engagement of the second engaging portion 33 with the engaging portion 61, whereby the latch 3 is biased towards the unlatching position.

The rattle lever 6 has a holding portion 62 which holds the striker S which is locked by the latch 3 in an interior of the locking groove 31. When the latch 3 stays in the latching position, the holding portion 62 is disposed so as to project into the locking groove 31 from the side wall 31a, which is positioned on a bottom side of the striker groove 22, so as to hold the striker S together with the side wall 31b, which is positioned on an opening side of the striker groove 22, such that the striker S is held between the holding portion 62 and the side wall 31b. Incidentally, of the side walls 31a, 31b of the locking groove 31 of the latch 3, the side wall 31a on a first side of the striker groove 22 may be referred to as a first side wall 31a, and the side wall 31b on a second side of the striker groove 22 may be referred to as a second side wall 31b. The first side of the striker groove 22 may be the bottom side, and the second side of the striker groove 22 may be the opening side.

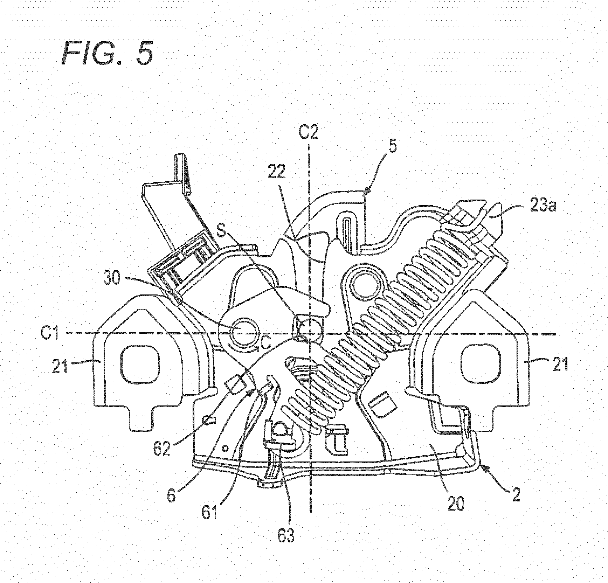

As shown in Figs. 4 and 5, the rattle lever 6 is rotated together with the latch 3 as the latch 3 rotates towards the latching position, and the rattle spring 12 is stretched as the rattle lever 6 is so rotated. Then, with the rattle spring 12 stretched, the rattle spring 12 is disposed to straddle a first center line C1. The first center line C1 passes through the latch shaft 30 acting as a rotational shaft of the rattle lever 6 and extends in a direction at right angles to a direction in which the striker groove 22 of the base plate 2 extends. The first center line C1 may be referred to as a vertical center line C1.

Specifically, an attaching portion 23a of the base plate 2 to which one end of the rattle spring 12 is attached is provided at a side of an opening of the striker groove 22 and is disposed on an upper side of the first center line C1. An attaching portion 63 of the rattle lever 6 to which the other end of the rattle spring 12 is attached is disposed on a lower side of the first center line C1 with the latch 3 staying in the latching position and the rattle lever 6 rotated in an opposite direction to the direction indicated by the arrow C.

As a result of the rattle spring 12 being disposed to straddle the first center line C1, the stretching amount of the rattle spring 12 is expanded within the limited space in the hood lock apparatus 1 compared with a case where the rattle spring 12 is stretched and contracted on either side of the first center line C1.

Further, in this example, the rattle spring 12 is disposed to straddle a second center line C2 extending along the striker groove 22 of the base plate 2. The second center line C2 may be referred to as a horizontal center line C2. In the illustrated example, the attaching portion 23a of the base plate 2 provided on a periphery of the opening of the striker groove 22 is disposed on a right-hand side of the second center line C2, and the attaching portion 63 of the rattle lever 6 is disposed on a left-hand side of the second center line C2 (see, for example, Figs. 4 and 5). By adopting this configuration, the stretching amount of the rattle spring 12 is expanded further within the limited space in the hood lock apparatus 1 compared with a case where the rattle spring 12 is stretched and contracted on either side of the second center line C2.

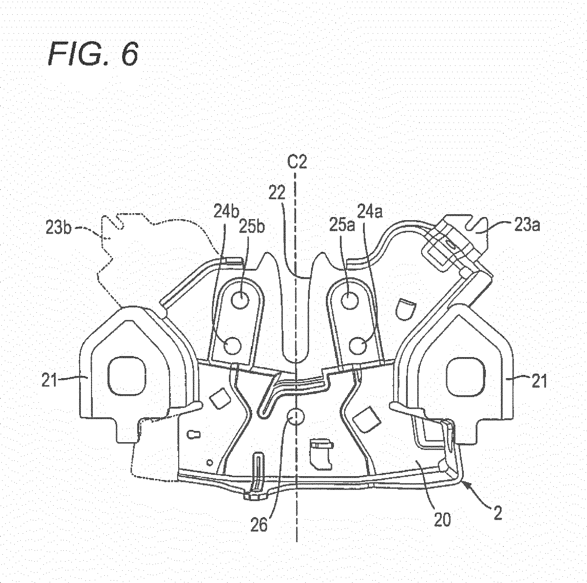

As shown in Fig. 6, before the rattle spring 12 and the like are assembled on to the base plate 2, the base plate 2 has a first attaching portion 23a and a second attaching portion 23b to which one end of the rattle spring 12 can be attached, and the first attaching portion 23a and the second attaching portion 23b are provided laterally symmetrical across the second center line C2. One end of the rattle spring 12 is attached to either of the first attaching portion 23a and the second attaching portion 23b (in the illustrated example, to the attaching portion 23a), and the other attaching portion (in the illustrated example, the attaching portion 23b) is removed, for example.

Similarly, the base plate 2 has a first attaching portion 24a and a second attaching portion 24b to which the latch shaft 30, which acts as the rotational shaft about which the latch 3 and the rattle lever 6 rotate, can be attached. The base plate 2 also has a first attaching portion 25a and a second attaching portion 25b to which the locking plate shaft 40, which acts as the rotational shaft about which the locking plate 4 rotates, can be attached. The first attaching portion 24a and the second attaching portion 24b are provided laterally symmetrical across the second center line C2, and the first attaching portion 25a and the second attaching portion 25b are also provided laterally symmetrical across the second center line C2.

In this way, the first attaching portion and the second attaching portion which are laterally symmetrical across the second center line C2 are provided on the base plate 2 for each of the latch 3, the locking plate 4, the rattle lever 6 and the rattle spring 12, whereby the latch 3 and the others can be attached to the base plate 2 which is common for a left-hand drive vehicle and a right-hand drive vehicle. This realizes a reduction in production cost of the hood lock apparatus 1. It should be noted that an attaching portion 26 to which the secondary latch shaft 50, which acts as the rotational shaft of the secondary latch 5, is attached is provided on the second center line C2 and that only one attaching portion 26 is provided.

Ilereinafter, an operation of the hood lock apparatus will be described.

Referring to Figs. 1 to 3, firstly, in closing the hood, the striker S which moves as the hood is closed is brought into abutment with an outer edge portion 51a of the locking portion 51 of the secondary latch 5 which is disposed on the traveling path of the striker S. The outer edge portion 51a is inclined relative to the traveling path of the striker S, and as a result of the striker S being brought into abutment with the locking portion 51, the secondary latch 5 is rotated in an opposite direction to the direction indicted by the arrow B towards the secondary unlatching position. This deflects the locking portion 51 so as to be disposed out of the traveling path of the striker S, whereby the striker groove 22 of the base plate 2 is opened.

The striker S enters the striker groove 22 which is now opened and enters further the locking groove 31 of the latch 3 which stays in the unlatching position. Then, the striker S which has entered the locking groove 31 presses against the side wall 31a of the locking groove 31 which lies ahead of the striker S which is moving deeper into the locking groove 31. Thus, the striker S moves towards a bottom of the striker groove 22 while rotating the latch 3 towards the latching position. Then, the rattle lever 6 whose engaging portion 61 is in engagement with the second engaging portion 33 of the latch 3 is also rotated in the opposite direction to the direction indicated by the arrow C together with the latch 3 as the latch 3 is rotated towards the latching position as a result of the latch 3 being pressed against by the striker S.

Referring to Figs. 4 and 5, when the striker S arrives at a bottom portion of the striker groove 22, the latch 3 is disposed in the latching position, and the locking plate 4 is disposed in the locking position. This brings the first engaging portion 32 of the latch 3 into engagement with the engaging portion 41 of the locking plate 4, and the latch 3 is locked by the locking plate 4. The striker S is locked by the latch 3, and the hood is held in a fully closed state by the hood lock apparatus 1.

Here, in order to bring the first engaging portion 32 of the latch 3 into engagement with the engaging portion 41 of the locking plate 4, the striker S needs to be pushed in once deeper towards the bottom of the striker groove 22 than the locking position. As a result of the striker S being pushed in once deeper towards the bottom of the striker groove 22 than the locking position, the latch 3 is rotated to pass the latching position, whereby the engaging portion 41 of the locking plate 4 rides over the first engaging portion 32 of the latch 3 to be brought into engagement with the first engaging portion 32. As this occurs, although the rattle lever 6 is rotated in the opposite direction to the direction indicated by the arrow C together with the latch 3, the biasing force of the rattle spring 12 which biases the rattle lever 6 in the direction indicated by the arrow C constitutes a resistance against the effort with which the striker S is pushed in once deeper towards the bottom of the striker groove 22 than the locking position.

In the hood lock apparatus 1, as described above, the rattle spring 12 is disposed to straddle the first center line C1, and the stretching amount of the rattle spring 12 is expanded within the limited space of the hood lock apparatus 1. Namely, the biasing force of the rattle spring 12 is ensured by the stretching amount of the rattle spring 12, and the spring constant of the rattle spring 12 is suppressed to a relatively low level. Because of this, the resistance caused by the biasing force of the rattle spring 12 when the striker S is pushed in once deeper towards the bottom of the striker groove 22 than the locking position is reduced, whereby the operability in closing the hood is improved.

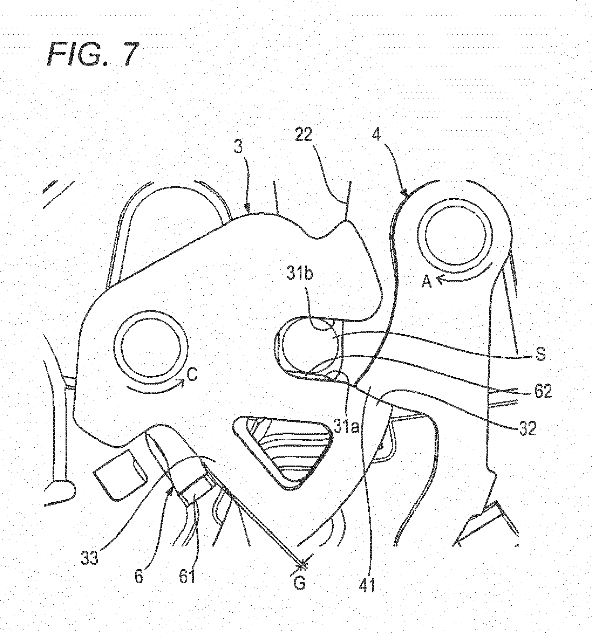

Next, in such a state that the hood is held in the fully closed state, that is, in such a state that the latch 3 is locked by the locking plate 4 and the striker S is locked by the latch 3, the holding portion 62 of the rattle lever 6, which is biased in the direction indicated by the arrow C by the rattle spring 12, is disposed so as to project into the locking groove 31 of the latch 3 to thereby hold the striker S with the side wall 31b of the locking groove 31 of the latch 3 at the open side of the striker groove 22, such that the striker S is held between the side wall 31b at the opening side of the striker groove 22 and the holding portion 62 of the rattle lever 6. This eliminates the gap between the striker S and the latch 3, whereby the generation of rattling noise is suppressed which is attributed to the repeated abutment of the striker S with the latch 3 caused by vibrations of the vehicle.
Here, as shown in Fig. 7, a gap G is provided between the second engaging portion 33 of the latch 3 and the engaging portion 61 of the rattle lever 6 in such a state that the latch 3 and the rattle lever 6 hold the striker S between the latch 3 and the rattle lever 6. With higher dimensional accuracy of the latch 3 and the rattle lever 6, it is possible to hold the striker S by the latch 3 and the rattle lever 6 between them in such a state that the second engaging portion 33 is in engagement with the engaging portion 61. However, with the second engaging portion 33 and the engaging portion 61 disposed apart from each other, the striker S can be held by the latch 3 and the rattle lever 6 between the latch 3
and the rattle lever 6 without requiring excessively severe dimensional accuracy on the latch 3 and the rattle lever 6, thereby making it possible to realize a reduction in production cost of the hood lock apparatus 1. Next, in opening the hood, firstly, the hood lever in the passenger compartment of the vehicle is operated, whereby the locking plate 4 is rotated in the opposite direction to the direction indicated by the arrow A as the hood lever is operated, and is then disposed in the unlocking position. The engagement of the first engaging portion 32 of the latch 3 with the engaging portion 41 of the locking plate 4 is released as a result of the locking plate 4 being disposed in the unlocking position, whereby the locking of the latch 3 by the locking plate 4 is released.

When the locking of the latch 3 by the locking plate 4 is released, the latch 3 can be rotated towards the unlatching position, and the rattle lever 6 which is biased by the rattle spring 12 is rotated in the direction indicated by the arrow C. The second engaging portion 33 of the latch 3 is brought into engagement with the engaging portion 61 of the rattle lever 6 as the rattle lever 6 rotates, and the biasing force of the rattle spring 12 is transmitted to the latch 3 via the engagement of the second engaging portion 33 with the engaging portion 61, whereby the latch 3 is rotated towards the unlocking position. Then, the striker S is pushed up towards the open side of the striker groove 22 of the base plate 2 by the latch 3.

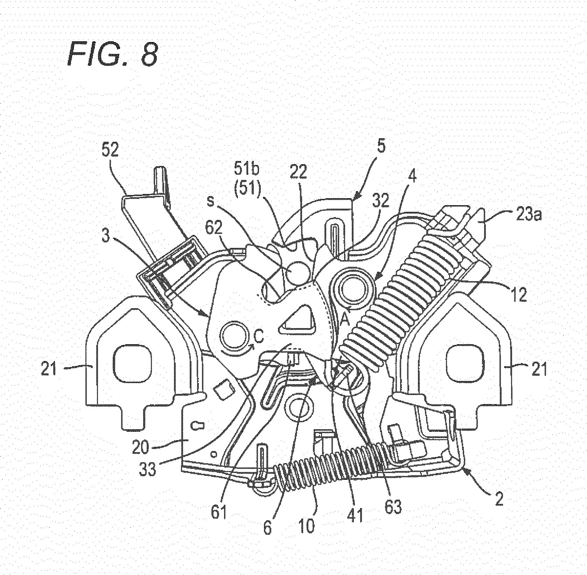

Here, as shown in Fig. 8, it is preferable that the rattle lever 6 is spaced apart from the striker S in such a state that the second engaging portion 33 of the latch 3 is in engagement with the engaging portion 61 of the rattle lever 6. In a case where the striker S is kept in contact with the rattle lever 6, friction is generated by a sliding contact between the striker S and the rattle lever 6. However, no friction is generated between the rattle lever 6 and the striker S as a result of the rattle lever 6 being spaced apart from the striker S, whereby the latch 3 and the rattle lever 6 are allowed to rotate smoothly, which enhances the ensured operation of the hood lock apparatus 1.

The striker S which is pushed up by the latch 3 is brought into abutment with an inner edge portion 51b of the locking portion 51 of the secondary latch 5 which is disposed on the traveling path of the striker S, whereby the striker S is stopped in the vicinity of the open end of the striker groove 22. This stops the opening operation of the hood temporarily, and the hood is popped up to a predetermined opening angle or open position.

In opening the hood fully, the safety lever 52 is operated manually, whereby the secondary latch 5 is rotated in an opposite direction to the direction indicated by the arrow B (refer to Fig. 2) as the safety lever 52 is operated and is then disposed in the secondary unlocking position. When the secondary latch 5 is disposed in the secondary unlocking position, the locking portion 51 is deflected to be disposed out of the traveling path of the striker S, whereby the striker groove 22 is opened. This allows the striker S to exit from the striker groove 22, whereby the hood is opened fully.

Thus, as has been described heretofore, according to the hood lock apparatus 1, the rattle spring 12, which biases the rattle lever 6 holding the striker S with the latch 3 between the latch 3 and the rattle lever 6, is disposed to straddle the first center line C1. The first center line C1 passes through the latch shaft 30 acting as a rotational shaft of the rattle lever 6 and extends in the direction at the right angles to the direction in which the striker groove 22 of the base plate 2 extends. The stretching amount of the rattle spring 12 is expanded even within the limited space of the hood lock apparatus 1. The biasing force of the rattle spring 12 is ensured by the stretching amount of the rattle spring 12, so that it is possible to provide the hood lock apparatus 1, which is small in size and superior in operability, and which can suppress the generation of rattle noise.

## Claims

1. A hood lock apparatus (1) configured to hold a hood of a vehicle in a closed state by locking a striker (S) provided on the hood, the hood lock apparatus (1) comprising:
a base plate (2) fixed to a vehicle body structural member of an engine compartment, the engine compartment being opened and closed by the hood, the base plate (2) comprising a striker groove (22) into which the striker (S) enters in response to a closing operation of the hood;
a latch (3) rotatably supported on the base plate (2), the latch (3) being configured to lock the striker (S) entered into the striker groove (22) so as not to exit from the striker groove (22);
a locking plate (4) rotatably supported on the base plate (2), the locking plate (4) being configured to lock the latch (3), which locks the striker (S), so as not to rotate;
a rattle lever (6) rotatably supported on the base plate (2), the rattle lever (6) being configured to hold the striker (S), which is locked by the latch (3), with the latch (3); and
a rattle spring (12) provided to extend between the base plate (2) and the rattle lever (6), the rattle spring (12) being configured to bias the rattle lever (6) holding the striker (S) with the latch (3) towards the striker (S),
wherein the rattle spring (12) is disposed to straddle a first center line (C1), the first center line (C1) passing through a rotational shaft (30) of the rattle lever (6) and extending in a direction which is at right angles to a direction in which the striker groove (22) extends,
wherein the latch (3) comprises an engaging portion (33),
wherein the rattle lever (6) comprises an engaging portion (61),
wherein the engaging portion (33) of the latch (3) and the engaging portion (61) of the rattle lever (6) being brought into engagement with each other so as to transmit a biasing force of the rattle spring (12) from the rattle lever (6) to the latch (3), and
wherein in a state where the rattle lever (6) holds the striker (S) with the latch (3) being locked by the locking plate (4), the engaging portion (33) of the latch (3) and the engaging portion (61) of the rattle lever (6) are spaced apart from each other.

2. The hood lock apparatus (1) according to claim 1, wherein the rattle spring (12) is disposed to straddle a second center line (C2), the second center line (C2) extending along the striker groove (22).

3. The hood lock apparatus (1) according to claim 2, wherein in a state where the locking of the latch (3) by the locking plate (4) is released, the engaging portion (33) of the latch (3) and the engaging portion (61) of the rattle lever (6) are brought into engagement with each other, and the rattle lever (6) is spaced apart from the striker (S).

4. The hood lock apparatus (1) according to any one of claims 1 to 3,
wherein the base plate (2) comprises first attaching portions (23a) and second attaching portions (23b) for each of the latch (3), the locking plate (4), the rattle lever (6) and the rattle spring (12), and
wherein the first attaching portions (23a) and the second attaching portions (23b) are provided laterally symmetrical with respect to a second center line (C2), the second center line (C2) extending along the striker groove (22).

## Patentansprüche

1. Haubenverriegelungsvorrichtung (1), die konfiguriert ist zum Halten einer Haube eines Fahrzeugs in einem geschlossenen Zustand durch das Sperren eines an der Haube vorgesehenen Anschlags (S), wobei die Haubenverriegelungsvorrichtung (1) umfasst:
eine Basisplatte (2), die an einem Fahrzeugkarosserie-Strukturglied eines Motorraums fixiert ist, wobei der Motorraum durch die Haube geöffnet und geschlossen wird, wobei die Basisplatte (2) eine Anschlagvertiefung (22) umfasst, in die der Anschlag (S) eintritt, wenn die Haube geschlossen wird,
einen Riegel (3), der drehbar an der Basisplatte (2) gehalten wird, wobei der Riegel (3) konfiguriert ist zum Sperren des in die Anschlagvertiefung (22) eingetretenen Anschlags (S), damit dieser nicht aus der Anschlagvertiefung (22) austritt,
eine Sperrplatte (4), die drehbar an der Basisplatte (2) gehalten wird, wobei die Sperrplatte (4) konfiguriert ist zum Sperren des den Anschlag (S) sperrenden Riegels (3), damit er sich nicht dreht,
einen Klapperhebel (6), der drehbar an der Basisplatte (2) gehalten wird, wobei der Klapperhebel (6) konfiguriert ist zum Halten des durch den Riegel (3) gesperrten Anschlags (S) mit dem Riegel (3), und
eine Klapperfeder (12), die derart vorgesehen ist, dass sie sich zwischen der Basisplatte (2) und dem Klapperhebel (6) erstreckt, wobei die Klapperfeder (12) konfiguriert ist zum Vorspannen des den Anschlag (S) haltenden Klapperhebels (6) mit dem Riegel (3) zu dem Anschlag (S),
wobei die Klapperfeder (12) über eine erste Mittenlinie (C1) hinweg angeordnet ist, wobei die erste Mittenlinie (C1) durch eine Drehwelle (30) des Klapperhebels (6) verläuft und sich in einer Richtung mit rechten Winkeln zu der Erstreckungsrichtung der Anschlagvertiefung (22) erstreckt,
wobei der Riegel (3) einen Eingreifteil (33) umfasst,
wobei der Klapperhebel (6) einen Eingreifteil (61) umfasst,
wobei der Eingreifteil (33) des Riegels (3) und der Eingreifteil (61) des Klapperhebels (6) in einen Eingriff miteinander gebracht werden, um eine Vorspannkraft der Klapperfeder (12) von dem Klapperhebel (6) zu dem Riegel (3) zu übertragen, und
wobei in einem Zustand, in dem der Klapperhebel (6) den Anschlag (S) hält und der Riegel (3) durch die Sperrplatte (4) gesperrt wird, der Eingreifteil (33) des Riegels (3) und der Eingreifteil (61) des Klapperhebels (6) voneinander beabstandet sind.

2. Haubenverriegelungsvorrichtung (1) nach Anspruch 1, wobei die Klapperfeder (12) über eine zweite Mittenlinie (C2) hinweg angeordnet ist, wobei sich die zweite Mittenlinie (C2) entlang der Anschlagvertiefung (22) erstreckt.

3. Haubenverriegelungsvorrichtung (1) nach Anspruch 2, wobei in einem Zustand, in dem die Sperre des Riegels (3) durch die Sperrplatte (4) aufgehoben ist, der Eingreifteil (33) des Riegels (3) und der Eingreifteil (61) des Klapperhebels (6) in einen Eingriff miteinander gebracht werden und der Klapperhebel (6) von dem Anschlag (S) beabstandet ist.

4. Haubenverriegelungsvorrichtung (1) nach einem der Ansprüche 1 bis 3, wobei:
die Basisplatte (2) erste Befestigungsteile (23a) und zweite Befestigungsteile (23b) für jeweils den Riegel (3), die Sperrplatte (4), den Klapperhebel (6) und die Klapperfeder (12) umfasst, und
die ersten Befestigungsteile (23a) und die zweiten Befestigungsteile (23b) lateral symmetrisch in Bezug auf eine zweite Mittenlinie (C2) vorgesehen sind, wobei sich die zweite Mittenlinie (C2) entlang der Anschlagvertiefung (22) erstreckt.

## Revendications

1. Appareil de verrouillage de capot (1) configuré pour maintenir un capot d'un véhicule dans un état fermé en verrouillant une gâche (S) agencée sur le capot, l'appareil de verrouillage de capot (1) comprenant :
une plaque de base (2) fixée à un élément structurel de carrosserie de véhicule d'un compartiment moteur, le compartiment moteur étant ouvert et fermé par le capot, la plaque de base (2) comprenant une rainure de gâche (22) dans laquelle entre la gâche (S) en réponse à une opération de fermeture du capot ;
un verrou (3) supporté en rotation sur la plaque de base (2), le verrou (3) étant configuré pour verrouiller la gâche (S) entrée dans la rainure de gâche (22) de manière à ne pas sortir de la rainure de gâche (22) ;
une plaque de verrouillage (4) supportée en rotation sur la plaque de base (2), la plaque de verrouillage (4) étant configurée pour verrouiller le verrou (3), qui verrouille la gâche (S), afin de ne pas tourner,
un levier à cliquet (6) supporté en rotation sur la plaque de base (2), le levier à cliquet (6) étant configuré pour maintenir la gâche (S), qui est verrouillée par le verrou (3), avec le verrou (3) ; et
un ressort à cliquet (12) disposé pour s'étendre entre la plaque de base (2) et le levier à cliquet (6), le ressort à cliquet (12) étant configuré pour solliciter le levier à cliquet (6) maintenant la gâche (S) avec le verrou (3) vers la gâche (S),
dans lequel le ressort à cliquet (12) est disposé pour chevaucher une première ligne centrale (C1), la première ligne centrale (C1) passant à travers un arbre rotatif (30) du levier à cliquet (6) et s'étendant dans une direction qui est à des angles droits par rapport à une direction dans laquelle la rainure de gâche (22) s'étend,
dans lequel le verrou (3) comprend une partie de prise (33),
dans lequel le levier à cliquet (6) comprend une partie de prise (61),
dans lequel la partie de prise (33) du verrou (3) et la partie de prise (61) du levier à cliquet (6) sont mises en prise l'une avec l'autre de manière à transmettre une force de sollicitation du ressort à cliquet (12) depuis le levier à cliquet (6) vers le verrou (3), et
dans lequel dans un état où le levier à cliquet (6) maintient la gâche (S) avec le verrou (3) qui est verrouillé par la plaque de verrouillage (4), la partie de prise (33) du verrou (3) et la partie de prise (61) du levier à cliquet (6) sont espacées l'une de l'autre.

2. Appareil de verrouillage de capot (1) selon la revendication 1, dans lequel le ressort à cliquet (12) est disposé pour chevaucher une seconde ligne centrale (C2), la seconde ligne centrale (C2) s'étendant le long de la rainure de gâche (22).

3. Appareil de verrouillage de capot (1) selon la revendication 2, dans lequel dans un état où le verrouillage du verrou (3) par la plaque de verrouillage (4) est libéré, la partie de prise (33) du verrou (3) et la partie de prise (61) du levier à cliquet (6) sont mises en prise l'une avec l'autre, et le levier à cliquet (6) est espacé de la gâche (S).

4. Appareil de verrouillage de capot (1) selon l'une quelconque des revendications 1 à 3,
dans lequel la plaque de base (2) comprend des premières parties de fixation (23a) et des secondes parties de fixation (23b) pour chacun des loquet (3), plaque de verrouillage (4), levier à cliquet (6) et ressort à cliquet (12), et
dans lequel les premières parties de fixation (23a) et les secondes parties de fixation (23b) sont disposées de manière latéralement symétrique par rapport à une seconde ligne centrale (C2), la seconde ligne centrale (C2) s'étendant le long de la rainure de gâche (22).
